# FASCICULE DE BREVET EUROPEEN

(11) **EP 3 225 007 B1**
(45) Date de publication et mention de la délivrance du brevet: **27.11.2019**
(21) Numéro de dépôt: 15791709.7
(22) Date de dépôt: 22.10.2015
(51) Int. Cl.: H04L 29/06, G06F 12/02, G06F 9/445, G06F 8/654, H04L 29/08

(54) **PROCÉDÉ DE COMMUNICATION ENTRE UN OUTIL DE PRODUCTION ET UN VÉHICULE AUTOMOBILE**
VERFAHREN ZUR KOMMUNIKATION ZWISCHEN HERSTELLUNGSWERKZEUG UND KRAFTFAHRZEUG
METHOD OF COMMUNICATION BETWEEN A PRODUCTION TOOL AND A MOTOR VEHICLE

(30) Priorité: 26.11.2014 FR 1461475
(43) Date de publication de la demande: 04.10.2017
(73) Titulaire: PSA Automobiles SA, 78300 Poissy (FR)
(72) Inventeur: SCHMIDT, Pierre, F-95240 Cormeilles en Parisis (FR); LOPEZ, Thierry, F-78700 Conflans Ste Honorine (FR); BAVOUX, Bernard, F-91440 Bures sur Yvette (FR)
(74) Mandataire: Bourguignon, Eric Pascal Jean
(86) Numéro de dépôt international: PCT/FR2015/052839
(87) Numéro de publication internationale: WO 2016/083688

(56) Documents cités:
- FR-A1- 2 926 147
- Andreas Patzer ET AL: "XCP - The Standard Protocol for ECU Development Fundamentals and Application Areas", , 30 avril 2008 (2008-04-30), pages 1-116, XP055216639, Extrait de l'Internet: URL:http://vector.com/portal/medien/cmc/ma rketing_items/web/97185.pdf [extrait le 2015-09-28]
- Jesse Beeker ET AL: "Freescale Semiconductor Application Note", , 31 mars 2008 (2008-03-31), XP055216595, Extrait de l'Internet: URL:http://cache.freescale.com/files/micro controllers/doc/app_note/AN3615.pdf [extrait le 2015-09-28]

## Description

L'invention a trait à un procédé de communication entre un outil de production et un calculateur embarqué à bord d'un véhicule automobile.

Les véhicules automobiles comprennent différents organes fonctionnels dont la mise en œuvre et le contrôle dépendent de divers calculateurs implantés au sein du véhicule. Chaque calculateur intègre divers moyens de stockage qui coopèrent entre eux et notamment une mémoire Flash EPROM, EPROM étant l'acronyme de la désignation anglaise Erasable Programmable Read Only Memory. Cette mémoire Flash EPROM est dédiée au stockage de données numériques utiles au fonctionnement de(s) l'organe(s) fonctionnel(s) et sera ci-après désignée sous l'appellation mémoire Flash.

Plus précisément, la mémoire Flash comprend, d'une part, un premier espace mémoire dédié au stockage d'un code applicatif correspondant à des modèles mathématiques définissant la fonction nécessaire au pilotage de(s) l'organe(s) fonctionnel(s) par le calculateur. La mémoire Flash comprend, d'autre part, un second espace mémoire dédié au stockage de paramètres de calibration correspondant à des données numériques affectées aux différents modèles mathématiques du code applicatif.

Lors de la commande d'un véhicule par un client, le client choisit tout d'abord un modèle de véhicule auquel il associe, selon sa convenance, différentes options proposées par le constructeur automobile (motorisation, limiteur de vitesse, régulateur de vitesse, boîte de vitesse ...).

Le code applicatif présent au sein du premier espace mémoire est généralement commun à tous véhicules issus d'un même modèle, et les paramètres de calibration présents au sein du second espace mémoire diffèrent selon les véhicules d'un même modèle en fonction des différentes options choisies par le client.

Etant donné la pluralité d'options, lorsque le véhicule est en cours d'assemblage, le téléchargement et l'écriture des paramètres de calibration au sein du second espace mémoire sont réalisés lorsque le véhicule se trouve sur la chaîne de montage, le code applicatif étant généralement téléchargé et écrit au sein du premier espace mémoire de la mémoire Flash en amont par le fournisseur du calculateur.

Un poste dédié au téléchargement et à l'écriture des paramètres de calibration est par exemple prévu en fin de chaîne de montage. Pour chaque véhicule, l'opération consiste à connecter un outil de production (également appelé outil de téléchargement) sur une prise diagnostic centralisée du véhicule pour télécharger et écrire, via une procédure de téléchargement connue et décrite par exemple dans le brevet FR 2 719 924, les paramètres de calibration propres au véhicule commandé. L'état de la technique est également connu de par les documents suivants: Andreas Patzer ET AL: "XCP - The Standard Protocol for ECU Development Fundamentals and Application Areas", 30 avril 2008, pages 1-116 ainsi que par Jesse Beeker ET AL: "Freescale Semiconductor Application Note", 31 mars 2008.

La prise diagnostic centralisée du véhicule permet, en effet, d'avoir accès, lorsque le véhicule est assemblé ou en cours d'assemblage, aux différents calculateurs au moyen par exemple d'un média de communication de type ligne bidirectionnelle série K ou d'un réseau série bidirectionnel tel qu'un réseau CAN pour Contrôler Area Network dans la terminologie anglaise.

Plus précisément, le second espace mémoire présente actuellement une pluralité de zones mémoire, et plus précisément, au moins une zone mémoire appelée « zone mémoire de calibration » contenant des paramètres de calibration, et au moins une zone mémoire appelée « zone mémoire de bourrage » demeurant vierge (c'est-à-dire non écrite). Toute zone mémoire du second espace mémoire ne contenant pas de paramètres de calibration est considérée comme une « zone mémoire de bourrage ». A la suite de la mise à disposition du véhicule au client par le constructeur, chaque « zone mémoire de bourrage » est susceptible d'accueillir de nouveaux paramètres de calibration suite par exemple à une mise à jour des paramètres de calibration présents au sein de la mémoire Flash du calculateur. Cette évolution des paramètres de calibration a lieu également tout au long de la production d'un véhicule de modèle donné. Les paramètres de calibration ne représentent environ qu'un quart de la capacité totale de la mémoire Flash.

Les constructeurs automobiles constatent, depuis plusieurs années, que certains utilisateurs de véhicules procèdent à une modification, via la prise diagnostic centralisée, des données au sein de la mémoire Flash de calculateurs, et plus particulièrement du calculateur moteur pilotant le moteur du véhicule dans le but d'augmenter la puissance de celui-ci, et du(es) calculateur(s) pilotant les organes de traitement des gaz d'échappement tels que le filtre à particules et le système post-traitement SCR (acronyme de la désignation anglaise « Selective Catalytic Réduction ») pour s'affranchir de réparations couteuses sur ces différents organes de traitement, ces différentes pratiques étant plus connues sous la désignation anglaise « ChipTuning ».

Les constructeurs automobiles seront contraints, afin de respecter les normes européennes d'émission et de sécurité (et notamment la norme euro 6.2 ou euro 7), de mettre en place des calculateurs munis d'un mécanisme ACT pour « Anti ChipTuning » selon la désignation anglaise et ci-après appelé mécanisme ACT, ce mécanisme visant à renforcer la sécurité d'accès aux données d'un calculateur afin de garantir leur intégrité, et autrement dit empêcher une modification non autorisée des données.

Ce mécanisme ACT se traduit par la mise en place, de manière régulière, par exemple lors de chaque démarrage du véhicule, d'une comparaison entre une valeur de référence (équivalente à une signature numérique) et une valeur recalculée à partir du contenu de la mémoire Flash.

L'introduction ou la modification de(s) données au sein de la mémoire Flash, par une personne non autorisée, entraine une inégalité entre la valeur de référence et la valeur recalculée, provoquant par exemple une impossibilité de démarrer le véhicule.

Le mécanisme ACT exige notamment la lecture de l'ensemble des zones mémoires du second espace mémoire (« zone mémoire de calibration » et « zone mémoire de bourrage »), impliquant du fait de la technologie de gravure de la mémoire Flash, l'écriture de l'ensemble des zones mémoire du second espace mémoire.

En effet, certaines mémoires Flash, employées au sein des calculateurs, utilisent une technologie de gravure inférieure ou égale à 90 nm nécessitant l'utilisation d'un mécanisme ECC « Error Correction Coding » afin de détecter et corriger toutes erreurs lors de la lecture des données dans la mémoire Flash. L'emploi de telles mémoires impose l'écriture d'une zone mémoire d'un espace mémoire afin que le calculateur puisse lire cette zone mémoire. On s'intéresse plus particulièrement dans la suite de la description aux mémoires Flash utilisant le mécanisme ECC.

Afin de mettre en place le mécanisme ACT, des données prédéterminées, en adéquation avec la valeur de référence (mécanisme ACT), doivent être écrites au sein du second espace mémoire afin qu'à l'issue de la procédure de téléchargement, les « zones mémoire de calibration » contiennent les paramètres de calibration et les « zones mémoire de bourrage » contiennent les données prédéterminées lues par le calculateur, lors de la vérification de l'intégrité des données par le mécanisme ACT. Chaque « zone mémoire de bourrage » peut par exemple contenir une même donnée prédéterminée correspondant à la valeur hexadécimale 0xFF (selon la syntaxe du langage C).

Etant donné la quantité importante de données à écrire au sein de la mémoire Flash (les paramètres de calibration et les données prédéterminées) et afin de limiter le temps d'immobilisation du véhicule sur la chaîne de montage (ou autrement dit respecter le temps imparti), il est envisageable de compresser les données sous la forme de fichiers et ainsi d'avoir en mémoire au sein de l'outil de production, pour chaque calculateur, un fichier contenant les paramètres de calibration puis les données prédéterminées sous forme compressées.

Au cours de la procédure de téléchargement actuellement implémentée au sein de l'outil de production, la phase de téléchargement et d'écriture des paramètres de calibration est programmée au travers de requêtes courtes. L'envoi d'une requête courte par l'outil de production à destination du calculateur exige que celle-ci soit acquittée par le calculateur sous 250 ms.

Un fichier est décomposé en une pluralité de paquets, ces paquets devant être successivement téléchargés. En effet chaque requête permet le téléchargement d'un paquet (généralement 128 octets) que le calculateur va devoir décompresser et écrire en 250 ms. La taille de chaque paquet est définie dans le but d'optimiser la procédure de téléchargement.

Les paramètres de calibration sont des données peu compressibles ainsi le calculateur est capable de décompresser et d'écrire des paramètres de calibration se trouvant dans un paquet en moins de 250 ms.

Contrairement aux paramètres de calibrations, les données prédéterminées sont des données fortement compressibles, ainsi le calculateur est capable de décompresser, mais se trouve dans l'incapacité d'écrire des données prédéterminées se trouvant dans un paquet en moins de 250 ms.

A titre d'exemple, pour des données prédéterminées, le temps de décompression et d'écriture d'un paquet de 128 octets est d'environ 345ms. Pour obtenir cette valeur, on suppose d'une part, qu'une fois compressé, un paquet de 128 octets fournit 57344 octets et d'autre part que le temps de décompression est 1 ms pour un paquet de 128 octets et que le temps d'écriture est de 6 µs/octet, soit 344ms pour écrire 57344 octets. Il n'est donc pas possible de télécharger et écrire les données prédéterminées durant la phase de téléchargement et d'écriture des paramètres de calibration de la procédure de téléchargement.

Une solution pourrait être de diminuer la taille des paquets pour permettre au calculateur de décompresser et écrire les données prédéterminées se trouvant dans le paquet en moins de 250 ms mais cette solution n'est pas envisageable étant donné qu'elle augmenterait le nombre d'échanges entre l'outil de production et le calculateur, et de ce fait augmenterait également considérablement le temps nécessaire au transfert des données prédéterminées.

Un premier objectif est donc de proposer un procédé de communication permettant de répondre à l'exigence issue de l'implantation d'un mécanisme ACT au sein d'un calculateur tout en conservant l'outil de production et la procédure de téléchargement.

Un second objectif est de proposer un procédé de communication permettant de respecter le temps imparti d'immobilisation du véhicule sur la chaîne de montage pour effectuer l'opération de téléchargement.

Un troisième objectif est de proposer un calculateur configuré pour mettre en œuvre le procédé de communication répondant aux objectifs exprimés ci-dessus.

Un quatrième objectif est de proposer un véhicule automobile comprenant un calculateur répondant à l'objectif exprimé ci-dessus.

L'invention est définie par les revendications indépendantes. Les modes de réalisation préférés sont définis par les revendications dépendantes.

Il est proposé, en premier lieu, un procédé de communication entre un outil de production et un calculateur embarqué à bord d'un véhicule automobile, ce calculateur comprenant un moyen de stockage de données numériques et étant configuré pour contrôler ce moyen de stockage, ce moyen de stockage comprenant un espace mémoire divisé en une pluralité de zones mémoire, ce procédé comprenant les étapes suivantes :
- écriture par le calculateur de paramètres de calibration au sein d'au moins une zone mémoire prédéfinie de l'espace mémoire ;
- réception à la suite de l'écriture des paramètres de calibration, par le calculateur, d'une requête de vérification de l'intégrité des paramètres de calibration contenus dans la zone mémoire prédéfinie de l'espace mémoire du moyen de stockage, cette requête étant envoyée depuis l'outil de production ;
- vérification de l'intégrité des paramètres de calibration par le calculateur contenus dans la zone mémoire prédéfinie de l'espace mémoire ;
- envoi par le calculateur d'un message d'acquittement indiquant la fin de l'étape de vérification de l'intégrité des paramètres de calibration et le résultat de cette vérification, ce message étant envoyé à l'outil de production ;
ce procédé comprenant, en outre, à la suite de l'étape de réception de la requête de vérification de l'intégrité des paramètres de calibration, une étape d'écriture par le calculateur d'une donnée prédéterminée au sein de chaque zone mémoire non écrite de l'espace mémoire de sorte qu'à l'issue de l'envoi du message d'acquittement, chaque zone mémoire de l'espace mémoire contienne soit des paramètres de calibration soit une donnée prédéterminée.

Diverses caractéristiques supplémentaires peuvent être prévues, seules ou en combinaison :
- l'étape d'écriture d'une donnée prédéterminée au sein de chaque zone mémoire non écrite de l'espace mémoire par le calculateur est réalisée en amont de l'étape de vérification de l'intégrité des paramètres de calibrations et le message d'acquittement est envoyé à la suite de l'étape de vérification ;
- le moyen de stockage est une mémoire Flash ;
- le procédé comprend en outre les étapes suivantes :
   ∘ lecture d'informations d'identification du calculateur et d'un fichier contenant les paramètres de calibration puis comparaison de ces informations d'identification ;
   ∘ déverrouillage du calculateur ;
   ∘ téléchargement dans le calculateur du fichier contenant les paramètres de calibration stocké au sein de l'outil de production ;
   ∘ vérification de l'intégrité des paramètres de calibration écrits au sein de l'espace mémoire de la mémoire Flash ;
   ∘ mise à jour des informations d'identification du calculateur.

Il est proposé, en deuxième lieu, un calculateur embarqué à bord d'un véhicule automobile, ce calculateur comprenant un moyen de stockage de données numériques, ce moyen de stockage comprenant un espace mémoire divisé en une pluralité de zones mémoire, ce calculateur étant configuré pour :
- recevoir une requête de vérification de l'intégrité de paramètres de calibration contenus dans une zone mémoire prédéfinie de l'espace mémoire du moyen de stockage, cette requête de vérification étant envoyée depuis un outil de production ;
- vérifier l'intégrité des paramètres de calibration contenus dans la zone mémoire prédéfinie de l'espace mémoire ;
- envoyer un message d'acquittement indiquant la fin de l'étape de vérification de l'intégrité des paramètres de calibration et le résultat de cette vérification, ce message étant envoyé à l'outil de production ;
ce calculateur étant également configuré pour écrire une donnée prédéterminée au sein de chaque zone mémoire non écrite de l'espace mémoire après avoir reçu la requête de vérification de l'intégrité des paramètres de calibration.

Il est proposé, en troisième lieu, un véhicule automobile comprenant un calculateur tel que décrit ci-dessus.

D'autres objets et avantages de l'invention apparaîtront à la lumière de la description d'un mode de réalisation, faite ci-après en référence aux dessins annexés dans lesquels :
- la figure 1 est une vue schématique illustrant un véhicule (en pointillés) équipé d'un calculateur relié via un réseau à une prise diagnostic (en trait plein) avec un médaillon de détail à échelle agrandie ;
- la figure 2 est une vue schématique illustrant le branchement d'un outil de production sur la prise diagnostic du véhicule afin de télécharger et écrire des données au sein d'un moyen de stockage du calculateur.

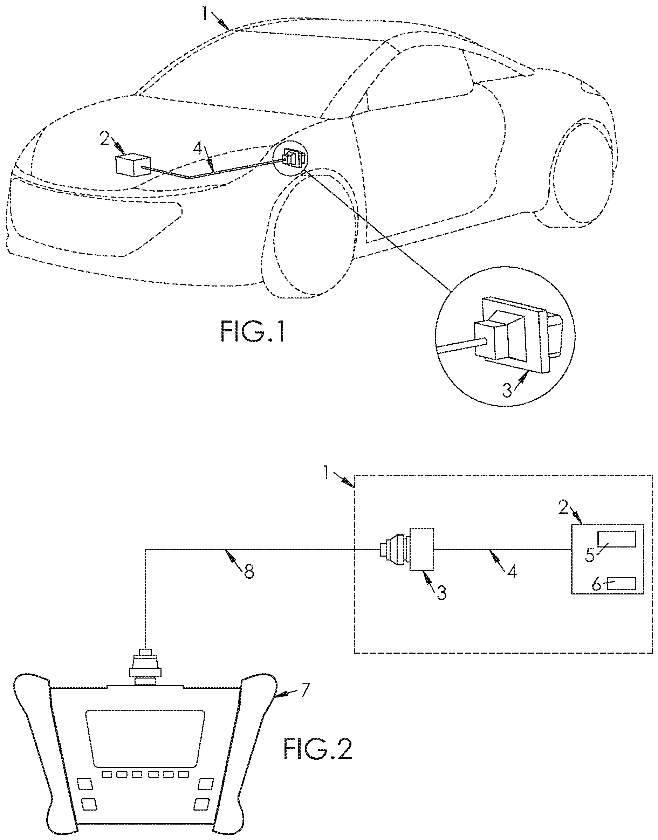

Sur la figure 1 est représenté un véhicule 1 automobile comprenant différents organes fonctionnels (non représentés) tels qu'un moteur ou des organes de traitement des gaz d'échappement dont la mise en œuvre et le contrôle dépendent de divers calculateurs **2** implantés au sein du véhicule **1.** Pour des raisons de clarté, un unique calculateur **2** est représenté au sein du véhicule **1** sur les figures.

Tel que représenté sur la figure 1, le véhicule **1** comprend, en outre, une prise **3** diagnostic (par exemple une prise diagnostic de type SAE J1962) centralisée accessible au sein du véhicule **1.** Cette prise **3** permet de communiquer électroniquement avec les calculateurs **2** lorsque le véhicule **1** est assemblé ou en cours d'assemblage. La prise **3** diagnostic permet ainsi de se connecter électroniquement aux différents calculateurs **2** via par exemple un média de communication de type ligne bidirectionnelle série K, ou avantageusement tel que représenté sur les figures, un réseau **4** série bidirectionnel tel qu'un réseau **4** CAN pour « Controler Area Network » selon la terminologie anglaise, ce réseau **4** CAN ayant par exemple une vitesse de transfert de données de 500 Kbps.

Chaque calculateur **2** présent au sein du véhicule **1** reçoit diverses informations provenant par exemple de différents capteurs et commande généralement au moins un organe fonctionnel au travers d'un ou plusieurs actionneurs auxquels il est associé.

Tel qu'illustré sur la figure 2, chaque calculateur **2** inclut divers moyens de stockage qui coopèrent entre eux et notamment :
- une mémoire **5** Flash EPROM, EPROM étant l'acronyme de la désignation anglaise Erasable Programmable Read Only Memory. Cette mémoire **5** Flash EPROM est dédiée au stockage de données numériques utiles au fonctionnement de(s) l'organe(s) fonctionnel(s) et sera ci-après dénommée mémoire **5** Flash.
- une mémoire **6** RAM, RAM étant l'acronyme de la désignation anglaise Random Access Memory, cette mémoire **6** RAM permettant de stocker de manière temporaire divers données numériques et sera ci-après dénommée mémoire **6** RAM.

Le calculateur **2** est configuré pour contrôler (lire, écrire, effacer ...) ces divers moyens de stockage et notamment la mémoire **5** Flash et la mémoire **6** RAM.

Chaque mémoire **5** Flash comprend, d'une part, un premier espace mémoire dédié au stockage du code applicatif correspondant à des modèles mathématiques définissant la fonction nécessaire au pilotage de(s) l'organe(s) fonctionnel(s) par le calculateur **2.** Chaque mémoire **5** Flash comprend, d'autre part, un second espace mémoire comprenant une pluralité de zones mémoire, ce second espace mémoire étant dédié notamment au stockage de paramètres de calibration correspondant à des données numériques affectées aux différents modèles mathématiques du code applicatif. Pour donner un ordre de grandeur, les paramètres de calibration représentent généralement un quart de la capacité totale de la mémoire **5** Flash.

Certaines mémoires **5** Flash, employées au sein des calculateurs **2**, incluent une technologie de gravure inférieure ou égale à 90 nm nécessitant l'utilisation d'un mécanisme ECC pour « Error Correction Coding » selon la désignation anglaise, ce mécanisme ECC permettant de détecter et corriger toute erreur lors de la lecture des données dans la mémoire **5** Flash. L'emploi de telles mémoires impose l'écriture d'une zone mémoire d'un espace mémoire afin que le calculateur **2** puisse lire cette zone mémoire. Dans la suite de la description, on considère que les mémoires **5** Flash utilisent un mécanisme ECC.

Le calculateur **2** est muni d'un mécanisme ACT pour « Anti ChipTuning » selon la désignation anglaise et, ci-après, appelé mécanisme ACT, ce mécanisme visant à renforcer la sécurité d'accès aux données du calculateur **2**, et notamment de la mémoire **5** Flash, afin de garantir leur intégrité, et autrement dit empêcher une modification non autorisée des données dans le but notamment d'accentuer les performances du moteur ou de désactiver les organes de traitements des gaz d'échappement.

Ce mécanisme ACT se traduit par la mise en place, de manière régulière, par exemple lors de chaque démarrage du véhicule **1**, d'une comparaison entre une valeur de référence (équivalente à une signature numérique) et une valeur recalculée à partir du contenu de la mémoire **5** Flash.

L'introduction ou la modification de(s) données au sein de la mémoire **5** Flash, par une personne non autorisée, entraine une inégalité entre la valeur de référence et la valeur recalculée, provoquant par exemple une impossibilité de démarrer le véhicule **1.**

Le mécanisme ACT exige ainsi la lecture de l'ensemble des zones mémoire du second espace mémoire, impliquant du fait de la technologie de gravure de la mémoire **5** Flash, l'obligation d'écrire l'ensemble des zones mémoire du second espace mémoire.

Plus précisément, le second espace mémoire présente au moins une zone mémoire appelée « zone mémoire de calibration » contenant des paramètres de calibration, et au moins une zone mémoire appelée « zone mémoire de bourrage » correspondant à toute autre zone mémoire du second espace mémoire ne stockant pas des paramètres de calibration. A la suite de la mise à disposition du véhicule **1** au client par le constructeur, chaque « zone mémoire de bourrage » est susceptible d'accueillir de nouveaux paramètres de calibration suite par exemple à une mise à jour des paramètres de calibration présents au sein de la mémoire **5** Flash du calculateur **2.** Les « zones mémoire de bourrage » contiennent des données prédéterminées lues par le calculateur **2**, lors de la vérification de l'intégrité des données au sein du calculateur **2** par le mécanisme ACT.

Lors de la commande d'un véhicule par un client, le client choisit tout d'abord un modèle de véhicule auquel il associe, selon sa convenance, différentes options proposées par le constructeur automobile (motorisation, limiteur de vitesse, régulateur de vitesse, boîte de vitesse ...).

Le code applicatif présent au sein du premier espace mémoire est généralement commun à tous véhicules issus d'un même modèle, et les paramètres de calibration présents au sein du second espace mémoire diffèrent selon les véhicules d'un même modèle en fonction des différentes options choisies par le client.

Etant donné la pluralité d'options, lorsque le véhicule est en cours d'assemblage, le téléchargement et l'écriture des paramètres de calibration au sein du second espace mémoire sont réalisés lorsque le véhicule se trouve sur la chaîne de montage, le code applicatif étant généralement téléchargé et écrit au sein du premier espace mémoire de la mémoire **5** Flash en amont par le fournisseur du calculateur **2.**

Tel qu'illustré sur la figure 2, un poste dédié au téléchargement et à l'écriture des paramètres de calibration est par exemple prévu en fin de chaîne de montage. Pour chaque véhicule **1**, l'opération consiste à connecter un outil **7** de production (également appelé outil de téléchargement), via par exemple un lien **8** de connexion, sur la prise **3** diagnostic centralisée du véhicule **1** pour télécharger et écrire, via une procédure de téléchargement, les paramètres de calibration propres au véhicule **1** commandé.

L'outil **7** de production dispose en mémoire, avantageusement sous la forme de fichiers et pour au moins un modèle de véhicule, des paramètres de calibration associés à chaque calculateur **2** du véhicule en fonction des différentes options retenues sur le véhicule.

Des informations d'identification (équivalentes à des signatures numériques) sont associées en l'occurrence à chaque calculateur **2** et à chaque fichier contenant des paramètres de calibration.

La procédure de téléchargement, à partir de l'outil **7** de production, des paramètres de calibration au sein d'un calculateur **2** comprend les phases suivantes définies dans un ordre chronologique :
- lecture des informations d'identification du calculateur **2** puis comparaison de ces informations d'identification avec celles associées au fichier contenant les paramètres de calibration (passage à la phase suivante sous réserve de la concordance des informations d'identification) ;
- déverrouillage du calculateur **2** ;
- effacement du second espace mémoire de la mémoire **5** Flash ;
- téléchargement et écriture des paramètres de calibration, situés initialement en mémoire dans l'outil **7** de production sous la forme d'un fichier, au sein du second espace mémoire de la mémoire **5** Flash (avantageusement les paramètres de calibration sont compressés au sein du fichier) ;
- vérification de l'intégrité des paramètres de calibration au sein du second espace mémoire de la mémoire **5** Flash (également appelé autocontrôle) (passage à la phase suivante sous réserve de l'intégrité des paramètres de calibration) ;
- mise à jour des informations d'identification du calculateur **2.**

La procédure de téléchargement, telle que décrite ci-dessus, correspond à la procédure de téléchargement actuellement implémentée au sein des outils **7** de production.

L'outil **7** de production et le calculateur **2** communiquent au travers de l'envoi d'une requête et la réception d'une réponse (par exemple un message d'acquittement) à cette requête définis par exemple selon le protocole de communication UDS pour « Unified Diagnostic Services » selon la désignation anglaise définie au sein de la norme ISO 14229.

L'outil **7** de production et le calculateur **2** communiquent notamment au travers de requêtes courtes ou de requêtes longues.

Plus précisément, lors de l'envoi d'une requête courte par l'outil **7** de production, celle-ci doit être exécutée en moins de 250 ms. Dans le cas où la requête émise par l'outil **7** de production n'est pas acquittée en moins de 250ms, l'outil **7** de production considère qu'il y a eu une erreur de communication et la procédure de téléchargement est par exemple interrompue. Au sein de la procédure de téléchargement, la phase de téléchargement et d'écriture des paramètres de calibrations est notamment programmée via une requête courte.

Contrairement à une requête courte, la durée de traitement d'une requête longue émise par l'outil **7** de production n'est pas limitée dans le temps avec néanmoins comme contrainte d'interroger périodiquement le calculateur **2**, via une demande de statut, afin de prendre connaissance de l'état d'avancement de l'opération associée à la requête longue émise. Au sein de la procédure de téléchargement, la phase vérification de l'intégrité des paramètres de calibration au sein du second espace mémoire de la mémoire **5** Flash est notamment programmée via une requête longue.

Dans la procédure de téléchargement décrite ci-dessus, lors de la phase de téléchargement et d'écriture des paramètres de calibration et la phase la vérification de l'intégrité des paramètres de calibration du second espace mémoire de la mémoire **5** Flash, un procédé de communication est mis en place, ce procédé comprenant les étapes suivantes :
- écriture par le calculateur **2** des paramètres de calibration au sein des « zones mémoire de calibration » du second espace mémoire (étape de la phase de téléchargement et d'écriture des paramètres de calibration de la procédure téléchargement) ;
- réception à la suite de l'écriture des paramètres de calibration, par le calculateur **2**, d'une requête de vérification de l'intégrité des paramètres de calibration contenus dans les « zones mémoire de calibration » du second espace mémoire, cette requête étant envoyée depuis l'outil **7** de production (étape de la phase de vérification de l'intégrité des paramètres de calibration) ;
- écriture par le calculateur **2** d'une donnée prédéterminée au sein de chaque « zone mémoire de bourrage » (non écrite) du second espace mémoire à la suite de la réception de la requête de vérification de l'intégrité des paramètres de calibration (étape de la phase de vérification de l'intégrité des paramètres de calibration) ;
- vérification de l'intégrité des paramètres de calibration par le calculateur **2** contenus dans le second espace mémoire et plus précisément au sein des « zones mémoire de calibration » (étape de la phase de vérification de l'intégrité des paramètres de calibration) ;
- envoi par le calculateur **2** d'un message d'acquittement indiquant la fin de l'étape de vérification de l'intégrité des paramètres de calibration et le résultat de cette vérification, ce message étant envoyé à l'outil **7** de production (étape de la phase de vérification de l'intégrité des paramètres de calibration).

Ainsi, à l'issue de l'envoi du message d'acquittement, chaque zone mémoire du second espace mémoire contient soit des paramètres de calibration soit une (ou plusieurs) donnée(s) prédéterminée(s). Plus précisément, une « zone mémoire de calibration » contient des paramètres de calibration et une « zone mémoire de bourrage » contient une (ou plusieurs) donnée(s) prédéterminée(s) choisie(s) en adéquation avec le mécanisme ACT. A titre d'exemple, la donnée prédéterminée peut correspondre à la valeur 0x45 (notion hexadécimale selon la syntaxe du langage C).

Avantageusement, l'étape d'écriture d'une donnée prédéterminée au sein de chaque « zone mémoire de bourrage » (non écrite pendant l'étape de téléchargement et écriture des paramètres de calibration) par le calculateur **2** est réalisée en amont de l'étape de vérification de l'intégrité des paramètres de calibration et le message d'acquittement est envoyé à la suite de l'étape de vérification.

La phase de vérification de l'intégrité des paramètres de calibration est programmée au travers d'une requête longue telle que définie ci-dessus. Le fait d'avoir une requête longue permet de ne pas imposer de contraintes temporelles à la phase de vérification de l'intégrité des paramètres de calibration dont la durée est susceptible de varier selon la taille de la zone mémoire de calibration, dont la lecture complète dépend de la taille de cette zone (généralement un quart de la taille totale de la mémoire Flash), mais aussi selon le type de mémoires Flash et plus précisément son temps d'accès en lecture., cet état de fait permettant au calculateur **2**, au cours de cette phase de vérification de l'intégrité et à la suite de la réception de la requête de vérification de l'intégrité, d'écrire des données prédéterminées au sein du second espace mémoire et en l'occurrence sur l'ensemble des « zones mémoire de bourrage » sans que l'outil **7** de production ne soit perturbé.

Afin de respecter les exigences associées aux requêtes longues, tout au long de la phase de vérification de l'intégrité, l'outil **7** de production interroge périodiquement (par exemple toutes les 250 ms) le calculateur **2**, via des demandes de statut, sur l'état d'avancement de la requête, et en l'occurrence sur l'état d'avancement de la vérification de l'intégrité des paramètres de calibration. En retour à ces différentes demandes de statut lors de la phase de vérification de l'intégrité, le calculateur **2** envoie soit une réponse indiquant que la vérification est en cours soit un message d'acquittement indiquant la fin de l'étape de vérification de l'intégrité des paramètres de calibration et le résultat de cette vérification, ce dernier message d'acquittement signifiant également pour l'outil **7** de production la fin de la phase de vérification de l'intégrité des paramètres de calibration de la procédure de téléchargement.

Les données prédéterminées sont choisies en adéquation avec le mécanisme ACT du calculateur **2.**

Le calculateur **2** permet de mettre en œuvre le procédé de communication ci-dessus décrit et est donc configuré pour :
- recevoir une requête de vérification de l'intégrité des paramètres de calibration contenus au sein des « zones mémoire de calibration » du second espace mémoire de la mémoire **5** Flash, cette requête de vérification étant envoyée depuis un outil **7** de production ;
- écrire une donnée prédéterminée au sein de chaque « zone mémoire de bourrage » du second espace mémoire de la mémoire **5** Flash après avoir reçu la requête de vérification de l'intégrité des paramètres de calibration ;
- vérifier l'intégrité des paramètres de calibration contenus dans les « zones mémoire de calibration » du second espace mémoire de la mémoire **5** Flash ;
- envoyer un message d'acquittement indiquant la fin de l'étape de vérification de l'intégrité des paramètres de calibrations et le résultat de cette vérification, ce message étant envoyé à l'outil **7** de production.

Cette étape d'écriture des données prédéterminées est transparente pour l'outil **7** de production au sein duquel est implémentée la procédure de téléchargement puisqu'elle est prise en charge par le calculateur **2.**

A l'issue de la phase de téléchargement et d'écriture des paramètres de calibration, la mémoire **5** Flash est capable de fournir au calculateur **2** l'emplacement des « zones mémoire de bourrage » au sein desquelles il va écrire les données prédéterminées, lors de la phase de vérification de l'intégrité des paramètres de calibration.

Selon un autre mode de réalisation, une adresse de début et une adresse de fin sont associées à chaque « zone mémoire de calibration » lors de la phase de téléchargement et d'écriture des paramètres de calibrations, ces différentes adresses de début et de fin étant enregistrées au sein de la mémoire **6** RAM. La cartographie des « zones mémoire de calibration » est également connue sous le nom de réservation et enregistrement dynamique du fait que la mémoire **5** Flash va enregistrer les adresses de début et de fin de chaque « zone mémoire de calibration » au fur et à mesure du téléchargement et de l'écriture des paramètres de calibrations au sein des différentes « zones mémoire de calibration ». Grâce à cette cartographie des « zones mémoire de calibration », le calculateur **2** connait par déduction l'emplacement des « zones mémoire de bourrage » (complémentaires aux « zones mémoire de calibration ») au sein desquelles il va écrire les données prédéterminées lors de la phase de vérification de l'intégrité des paramètres de calibration.

A l'issue de la procédure de téléchargement, au sein du second espace mémoire d'un calculateur **2**, les « zones mémoire de calibration » contiennent les paramètres de calibration et les « zones mémoire de bourrage » contiennent les données prédéterminées, les paramètres de calibration et les données prédéterminées étant lues par le calculateur **2**, lors de la vérification de l'intégrité des données par le mécanisme ACT.

Le procédé de communication qui vient d'être décrit présente les avantages suivants.

Premièrement, le fait d'écrire les données prédéterminées sur l'ensemble des « zones mémoire de bourrage » du second espace mémoire lors de la phase de vérification des paramètres de calibrations permet de répondre notamment à l'exigence du mécanisme ACT, c'est-à-dire d'avoir des données prédéterminées sur les « zones mémoire de bourrage » à l'issue de la procédure de téléchargement, ces données prédéterminées étant lues par le calculateur **2**, lors de la vérification de l'intégrité des données par le mécanisme ACT, par exemple lors de chaque démarrage du véhicule **1.** De plus, l'écriture de données sur l'ensemble des zones mémoire permet de répondre également aux exigences du mécanisme ECC qui impose notamment l'écriture d'une zone mémoire afin que le calculateur **2** puisse lire cette zone mémoire.

Deuxièmement, l'écriture des données prédéterminées par le calculateur au sein du second espace mémoire est transparente vis-à-vis de la procédure de téléchargement actuellement implémentée au sein de chaque outil **7** de production. Ceci permet de conserver tel quel chaque outil **7** de production au sein duquel est implémentée la procédure de téléchargement et d'éviter en d'autres termes une mise à jour onéreuse de la procédure de téléchargement ou dans le pire des cas un remplacement de chaque outil **7** de production.

Troisièmement, le procédé de communication permet de respecter le temps alloué à l'opération de téléchargement sur la chaîne de montage.

La présente invention permet donc l'implémentation de l'ACT (Anti Chip Tuning) dans un calculateur automobile disposant d'une mémoire dont la technologie de gravure nécessite l'adoption d'un mécanisme de détection/correction d'erreur (ECC). L'emploi de mémoires Flash impose l'écriture d'une zone mémoire d'un espace mémoire afin que le calculateur puisse lire cette zone mémoire.

La mémoire Flash doit pour cela être correctement configurée pendant sa programmation, c'est-à-dire durant l'écriture de la zone de calibration intervenant au cours de la production d'un véhicule. Or cette spécificité liée aux mémoires de gravure inférieure ou égale à 90nm doit apparaître transparente pour les outils de production actuels qui ne doivent pas être perturbés, d'où la présente invention consistant à insérer avant l'étape de vérification de l'intégrité des paramètres de calibration, une étape d'écriture par le calculateur d'une donnée prédéterminée au sein de chaque zone mémoire non écrite de l'espace mémoire. La transparence pour les outils de production est assurée en initiant cette étape d'écriture d'une donnée prédéterminée par la réception de la requête de vérification de l'intégrité des paramètres de calibration par le calculateur. Ainsi, cette nouvelle étape d'écriture d'une donnée prédéterminée est englobée dans l'étape de vérification et n'est de fait pas perçue par l'outil de production.

Par « donnée prédéterminée », dans le cadre de l'invention, il n'est pas question de valeurs de référence permettant de vérifier l'intégrité de la zone de calibration. La « donnée prédéterminée » au sens de l'invention permet d'avoir recours à des mémoires de technologie de gravure inférieure à 90 nm.

L'invention est très intéressante, car, avec des modifications mineures côté calculateur (insertion de façon transparente pour l'outil de production, d'une phase d'écriture de données prédéterminées au sein de l'étape de vérification des données de calibration), on évite une modification anticipée et onéreuse des outils de production.

## Revendications

1. Procédé de communication entre un outil (**7**) de production et un calculateur (**2**) embarqué à bord d'un véhicule (**1**) automobile, ce calculateur (**2**) comprenant un moyen de stockage de données numériques et étant configuré pour contrôler ce moyen de stockage, ce moyen de stockage comprenant un espace mémoire divisé en une pluralité de zones mémoire, ce procédé comprenant les étapes suivantes :
- écriture par le calculateur (**2**) de paramètres de calibration au sein d'au moins une zone mémoire prédéfinie de l'espace mémoire ;
- réception à la suite de l'écriture des paramètres de calibration, par le calculateur (**2**), d'une requête de vérification de l'intégrité des paramètres de calibration contenus dans la zone mémoire prédéfinie de l'espace mémoire du moyen de stockage, cette requête étant envoyée depuis l'outil (**7**) de production ;
- vérification de l'intégrité des paramètres de calibration par le calculateur (**2**) contenus dans la zone mémoire prédéfinie de l'espace mémoire ;
- envoi par le calculateur (**2**) d'un message d'acquittement indiquant la fin de l'étape de vérification de l'intégrité des paramètres de calibration et le résultat de cette vérification, ce message étant envoyé à l'outil (**7**) de production ; ce procédé étant **caractérisé en ce que** le moyen de stockage est une mémoire (**5**) Flash utilisant une technologie de gravure inférieure ou égale à 90 nm, et **en ce que** ledit procédé comprend, en outre, à la suite de l'étape de réception de la requête de vérification de l'intégrité des paramètres de calibration, une étape d'écriture par le calculateur (**2**) d'une donnée prédéterminée au sein de chaque zone mémoire non écrite de l'espace mémoire de sorte qu'à l'issue de l'envoi du message d'acquittement, chaque zone mémoire de l'espace mémoire contienne soit des paramètres de calibration soit une donnée prédéterminée.

2. Procédé de communication selon la revendication 1, **caractérisé en ce que** l'étape d'écriture d'une donnée prédéterminée au sein de chaque zone mémoire non écrite de l'espace mémoire par le calculateur (**2**) est réalisée en amont de l'étape de vérification de l'intégrité des paramètres de calibrations et le message d'acquittement est envoyé à la suite de l'étape de vérification.

3. Procédé de communication selon l'une des revendications précédentes, **caractérisé en ce que** le procédé comprend en outre les étapes suivantes :
- lecture d'informations d'identification du calculateur (**2**) et d'un fichier contenant les paramètres de calibration puis comparaison de ces informations d'identification ;
- déverrouillage du calculateur (**2**) ;
- téléchargement dans le calculateur (**2**) du fichier contenant les paramètres de calibration stocké au sein de l'outil (**7**) de production ;
- vérification de l'intégrité des paramètres de calibration écrits au sein de l'espace mémoire de la mémoire (**5**) Flash ;
- mise à jour des informations d'identification du calculateur (**2**).

4. Calculateur (**2**) embarqué à bord d'un véhicule (**1**) automobile, ce calculateur (**2**) comprenant un moyen de stockage de données numériques, ce moyen de stockage comprenant un espace mémoire divisé en une pluralité de zones mémoire, ce calculateur (**2**) étant configuré pour :
- recevoir une requête de vérification de l'intégrité de paramètres de calibration contenus dans une zone mémoire prédéfinie de l'espace mémoire du moyen de stockage, cette requête de vérification étant envoyée depuis un outil (**7**) de production ;
- vérifier l'intégrité des paramètres de calibration contenus dans la zone mémoire prédéfinie de l'espace mémoire ;
- envoyer un message d'acquittement indiquant la fin de l'étape de vérification de l'intégrité des paramètres de calibration et le résultat de cette vérification, ce message étant envoyé à l'outil (**7**) de production ;
ce calculateur (**2**) étant caractérisé en que le moyen de stockage est une mémoire (**5**) Flash utilisant une technologie de gravure inférieure ou égale à 90 nm, et en ce que ledit calculateur est également configuré pour écrire une donnée prédéterminée au sein de chaque zone mémoire non écrite de l'espace mémoire après avoir reçu la requête de vérification de l'intégrité des paramètres de calibration.

5. Véhicule (**1**) automobile comprenant un calculateur (**2**) selon la revendication 4.

## Patentansprüche

1. Verfahren zur Kommunikation zwischen einem Herstellungswerkzeug (7) und einem Bord-Rechner (2) eines Kraftfahrzeugs (1), wobei dieser Rechner (2) ein Mittel zum Speichern digitaler Daten umfasst und konfiguriert ist, um dieses Speichermittel zu steuern, wobei dieses Speichermittel einen Speicherplatz umfasst, der in eine Vielzahl von Speicherzonen geteilt ist, wobei dieses Verfahren die folgenden Schritte umfasst:
- Schreiben durch den Rechner (2) von Kalibrierungsparametern innerhalb mindestens einer vordefinierten Speicherzone des Speicherplatzes;
- Empfangen im Anschluss an das Schreiben der Kalibrierungsparameter durch den Rechner (2) einer Prüfanfrage der Integrität der Kalibrierungsparameter, die in der vorbestimmten Speicherzone des Speicherplatzes des Speichermittels enthalten sind, wobei diese Anfrage von dem Herstellungswerkzeug (7) gesendet wird;
- Prüfen der Integrität der Kalibrierungsparameter, die in der vordefinierten Speicherzone des Speicherplatzes enthalten sind, durch den Rechner (2) ;
- Senden durch den Rechner (2) einer Bestätigungsmeldung, die das Ende des Prüfschritts der Integrität der Kalibrierungsparameter und das Resultat dieser Prüfung angibt, wobei diese Meldung zu dem Herstellungswerkzeug (7) gesendet wird; wobei das Verfahren **dadurch gekennzeichnet ist, dass** das Speichermittel ein Flashspeicher (5) ist, der eine Brenntechnologie kleiner oder gleich 90 nm verwendet, und dass das Verfahren außerdem im Anschluss an den Schritt des Empfangens der Prüfanfrage der Integrität der Kalibrierungsparameter einen Schritt des Schreibens durch den Rechner (2) eines vorbestimmten Datums innerhalb jeder unbeschriebenen Speicherzone der Speicherstelle derart umfasst, dass nach dem Senden der Bestätigungsmeldung jede Speicherzone des Speicherplatzes entweder Kalibrierungsparameter oder ein gegebenes Datum enthält.

2. Kommunikationsverfahren nach Anspruch 1, **dadurch gekennzeichnet, dass** der Schritt des Schreibens eines vorbestimmten Datums innerhalb jeder unbeschriebenen Speicherzone der Speicherstelle durch den Rechner (2) stromaufwärts des Prüfschritts der Integrität der Kalibrierungsparameter ausgeführt und die Bestätigungsmeldung anschließend an den Prüfschritt gesendet wird.

3. Kommunikationsverfahren nach einem der vorstehenden Ansprüche, **dadurch gekennzeichnet, dass** das Verfahren außerdem die folgenden Schritte aufweist:
- Lesen von Identifikationsinformationen des Rechners (2) und einer Datei, die die Kalibrierungsparameter enthält, dann Vergleichen dieser Identifikationsinformationen;
- Entriegeln des Rechners (2);
- Downloaden in den Rechner (2) der Datei, die die Kalibrierungsparameter enthält, die innerhalb des Herstellungswerkzeugs (7) gespeichert sind;
- Prüfen der Integrität der Kalibrierungsparameter, die in die Speicherstelle des Flashspeichers (5) geschrieben sind;
- Aktualisieren der Identifikationsinformationen des Rechners (2).

4. Bord-Rechner (2) eines Kraftfahrzeugs (1), wobei dieser Rechner (2) ein Mittel zum Speichern digitaler Daten umfasst, wobei dieses Speichermittel eine Speicherstelle umfasst, die in eine Vielzahl von Speicherzonen geteilt ist, wobei der Rechner (2) konfiguriert ist, um:
- eine Prüfanfrage der Integrität von Kalibrierungsparametern, die in einer vorbestimmten Speicherzone der Speicherstelle des Speichermittels enthalten sind, wobei diese Prüfanfrage ausgehend von einem Herstellungswerkzeug (7) gesendet wird;
- Prüfen der Integrität der Kalibrierungsparameter, die in der vordefinierten Speicherzone der Speicherstelle enthalten sind;
- Senden einer Bestätigungsnachricht, die das Ende des Prüfschritts der Integrität der Kalibrierungsparameter und das Resultat dieser Prüfung angibt, wobei diese Meldung zu dem Herstellungswerkzeug (7) gesendet wird;
wobei der Rechner (2) **dadurch gekennzeichnet ist, dass** das Speichermittel ein Flashspeicher (5) ist, der eine Brenntechnologie kleiner oder gleich 90 nm verwendet, und dass der Rechner auch konfiguriert ist, um ein vorbestimmtes Datum innerhalb jeder unbeschriebenen Speicherzone der Speicherstelle zu schreiben, nachdem er die Prüfanfrage der Integrität der Kalibrierungsparameter empfangen hat.

5. Kraftfahrzeug (1), das einen Rechner (2) nach Anspruch 4 umfasst.

## Claims

1. A method of communication between a production tool (7) and a computer (2) on board a motor vehicle (1), this computer (2) including a means for digital data storage and being configured to control this storage means, this storage means including memory space divided into a plurality of memory areas, this method including the following steps:
- writing by the computer (2) of calibration parameters within at least one predefined memory area of the memory space;
- reception, following the writing of the calibration parameters, by the computer (2), of a verification request of the integrity of the calibration parameters contained in the predefined memory area of the memory space of the storage means, this request being sent from the production tool (7);
- verification of the integrity of the calibration parameters by the computer (2) contained in the predefined memory area of the memory space;
- sending by the computer (2) of an acknowledgement message indicating the end of the step of verification of the integrity of the calibration parameters and the result of this verification, this message being sent to the production tool (7); this method being **characterized in that** the storage means is a flash memory (5) using an etching technology less than or equal to 90 nm, and **in that** said method includes, furthermore, following the step of reception of the verification request of the integrity of the calibration parameters, a step of writing by the computer (2) of a predetermined item of data within each unwritten memory area of the memory space such that after the sending of the acknowledgement message, each memory area of the memory space contains either calibration parameters or a predetermined item of data.

2. The method of communication according to Claim 1, **characterized in that** the step of writing of a predetermined item of data within each unwritten memory are of the memory space by the computer (2) is carried out upstream of the step of verification of the integrity of the parameters of calibrations and the acknowledgement message is sent following the verification step.

3. The method of communication according to one of the preceding claims, **characterized in that** the method includes, furthermore, the following steps:
- reading of identification information of the computer (2) and of a file containing the calibration parameters then comparison of this identification information;
- unlocking of the computer (2);
- downloading in the computer (2) of the file containing the calibration parameters stored within the production tool (7);
- verification of the integrity of the calibration parameters written within the memory space of the flash memory (5);
- updating of the identification information of the computer (2).

4. A computer (2) on board a motor vehicle (1), this computer (2) including a storage means of digital data, this storage means including a memory space divided into a plurality of memory areas, this computer (2) being configured for:
- receiving a verification request of the integrity of calibration parameters contained in a predefined memory area of the memory space of the storage means, this verification request being sent from a production tool (7);
- verifying the integrity of the calibration parameters contained in the predefined memory area of the memory space;
- sending an acknowledgement message indicating the end of the verification step of the integrity of the calibration parameters and the result of this verification, this message being sent to the production tool (7);
this computer (2) being **characterized in that** the storage means is a flash memory (5) using an etching technology less than or equal to 90 nm, and **in that** said computer is also configured for writing a predetermined item of data within each unwritten memory area of the memory space after having received the verification request of the integrity of the calibration parameters.

5. A motor vehicle (1) including a computer (2) according to Claim 4.
